# EUROPEAN PATENT APPLICATION

(11) **EP 2 770 183 A1**
(43) Date of publication of application: **27.08.2014**
(21) Application number: 14156002.9
(22) Date of filing: 20.02.2014
(51) Int. Cl.: F02C 7/264, F02C 7/266, F02P 23/04

(54) **Gas turbine variable focus laser ignition**

(30) Priority: 22.02.2013 US 201313774237
(71) Applicant: PRATT & WHITNEY CANADA CORP., Longueuil, Quebec J4G 1A1 (CA)
(72) Inventor: Macchia, Enzo, Longueuil, Québec J4G 1A1 (CA); Guglielmin, George, Longueuil, Québec J4G 1A1 (CA); Lanzino, Joe, Longueuil, Québec J4G 1A1 (CA); Patel, Bhawan, Longueuil, Québec J4G 1A1 (CA)
(74) Representative: Hull, James Edward

(57) **Abstract**

A laser ignition system (30) for a gas turbine engine includes a combustion chamber (36). The system (30) comprises a laser source (32) for generating a continuous laser beam during an ignition process of the combustion chamber (36) and a dynamic laser focus apparatus positioned outside of the combustion chamber (36) for focusing the laser beam into a continuously varying focal point (45) to generate a laser kernel (46) moving within a spray of air/fuel mixture (38) injected into the combustion chamber (36).

## Description

### TECHNICAL FIELD

The application relates generally to gas turbine engines and, more particularly, to a laser ignition system for a gas turbine and method for igniting an air/fuel mixture in a combustion chamber.

### BACKGROUND OF THE ART

In a conventional ignition system for gas turbine engines, a high voltage is applied to an ignition plug that is exposed to the inside of the combustion chamber in order to ignite an air/fuel mixture by spark discharge. The conventional ignition systems suffer disadvantages such as carbon residues on the ignition plug resulting in spark discharge difficulties, reduced lifetime of the ignition plug due to delivering increased spark energy, difficulties with ignition due to a poor mixture of fuel and air near the combustor wall wherein the ignition occurs, etc. Efforts have been made to improve the conventional ignition systems and various types of igniters have been used, including electric igniters that create a spark proximate to the air/fuel mixture, heating elements that introduce heat to the air/fuel mixture and igniters that introduce a flame in the combustion area. However, such efforts continue for optimizing the ignition systems for gas turbines.

Accordingly there is a need to provide an improved ignition system and/or ignition method for gas turbines.

### SUMMARY

In one aspect, there is provided a laser ignition system for a gas turbine engine including a combustion chamber, the system comprising: a laser source for generating a laser beam during an ignition process of the combustion chamber; and a dynamic laser focus apparatus positioned outside of the combustion chamber and focusing the laser beam into a continuously varying focal point to generate a laser kernel moving within a spray of air/fuel mixture injected into the combustion chamber.

In another aspect, there is provided a method for igniting an air/fuel mixture in a combustion chamber of a gas turbine, comprising: a) generating a continuous laser beam during an ignition process of the air/fuel mixture in the combustion chamber; b) focusing the laser beam in a continuously varying manner to generate a focal point which moves continuously within the air/fuel mixture searching for a location for generating a laser kernel resulting from plasma discharge within the air/fuel mixture in order to ignite the air/fuel mixture without creating a spark.

### DESCRIPTION OF THE DRAWINGS

Reference is now made to the accompanying drawings in which:
FIG. 1 is a schematic side cross-sectional view of a gas turbine engine as an exemplary application of the described subject matter;
FIG. 2 is a schematic illustration of a laser ignition system for the gas turbine engine of FIG. 1, according to one embodiment;
FIG. 3 is a schematic illustration of the laser ignition system of FIG. 2, showing the laser energy kernel firing range of the laser ignition system;
FIG. 4 is a schematic illustration of a dynamic focus lens according to one embodiment, which may be used in the laser ignition system of FIG. 2; and
FIG. 5 is a schematic illustration of a rotating lens according to another embodiment, which may be used in the laser ignition system of FIG. 2.

It will be noted that throughout the appended drawings, like features are identified by like reference numerals.

### DETAILED DESCRIPTION

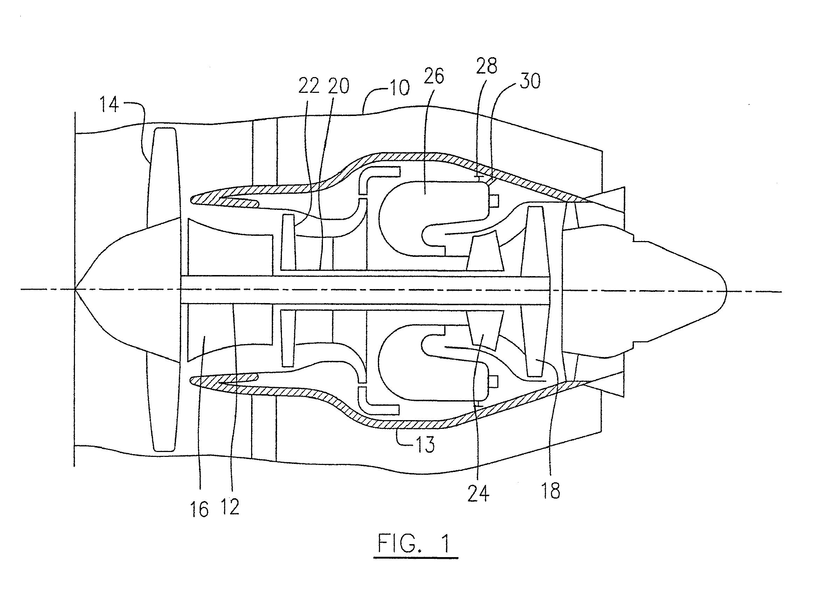

FIG.1 illustrates an aircraft turbofan gas turbine engine presented as an example of the application of the described subject matter including a housing or nacelle 10, an annular core casing or engine outer case 13, a low pressure spool assembly seen generally at 12 which includes a fan assembly 14, a low pressure compressor assembly 16 and a low pressure turbine assembly 18, and a high pressure spool assembly seen generally at 20 which includes a high pressure compressor assembly 22 and a high pressure turbine assembly 24. The annular outer case 13 surrounds the low and high pressure spool assemblies 12 and 20 in order to define a main fluid path (not numbered) therethrough. A combustor 26 is provided in the main fluid path. A plurality of fuel nozzles 28 are attached to and extend into the combustor 26 and a laser ignition system 30 according to one embodiment, may be provided adjacent to one of the fuel nozzles 28.

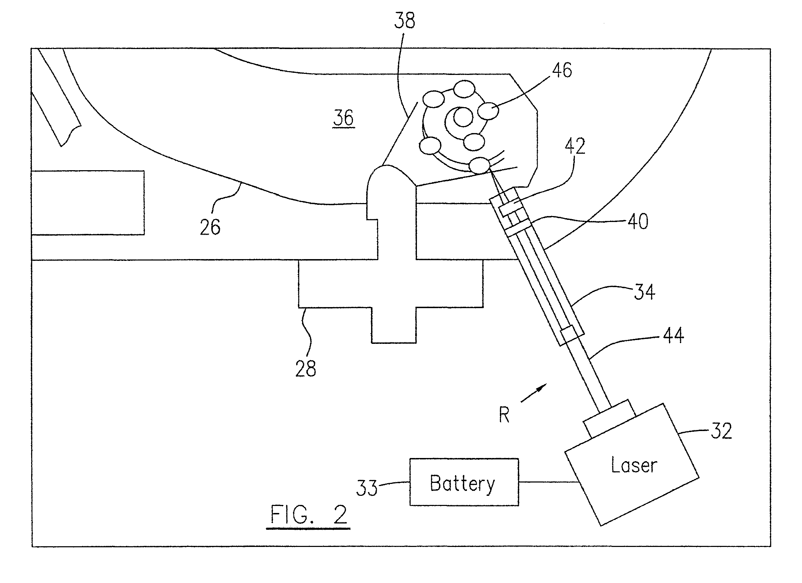

Referring to FIG. 2, the laser ignition system 30 of FIG. 1 may include a laser generator 32 which is supported by a stationary structure (not shown) of the engine, and a laser plug 34 which may have a tubular configuration and may be connected at one end thereof, to a wall of the combustor 26 and adjacent to, for example one fuel nozzle 28. The laser plug 34 may contain a dynamic laser focus apparatus (not numbered), including for example a modulatable focusing system having a modulating lens 40 and an optical window 42 positioned near the end of the laser plug 34 connected to the wall of the combustor 26. The fuel nozzle 28 which is adjacent to the laser plug 34, similar to other fuel nozzles, may be supported on a stationary structure (not numbered) of the engine to allow a nozzle head (not numbered) to extend into a chamber 36 defined by the combustor 26. The fuel nozzle 28 is connected to a fuel source (not shown) and a source of air (not shown) to provide a spray of air/fuel mixture 38 injected from the head of the fuel nozzle 28 into a primary combustion zone in the combustion chamber 36. The modulatable focusing system is capable of focusing a laser beam into a continuously varying focal point to generate a laser kernel 46 moving within the spray of air/fuel mixture 38 injected into the combustion chamber 36, thereby introducing a system that may find the optimal path for the laser kernel 46 to intersect the spray of the air/fuel mixture 38.

During an ignition process when the engine is being started, the laser generator 32 generates, for example a continuous or varying laser beam delivered through the laser plug 34 into the dynamic laser focus apparatus. The laser generator 32 need not necessarily be directly connected to the laser plug 34. According to one embodiment, a silver-lined, helium filled fibre optic cable 44 may be provided between the laser generator 32 and the dynamic laser focus apparatus for delivering such a laser beam with higher laser outputs.

The dynamic laser focus apparatus, for example the modulating lens 40, receives the laser beam from the laser generator 32 for example through the fibre optic cable 44, and focuses the laser beam into a continuously varying focal point which is projected through the optical window 42 into the combustion chamber 36, for example into the primary combustion zone therein. The laser energy with very high density carried by the focal point, breaks down or ionizes air molecules to generate a "plasma discharge". The hot plasma which refers to the fuel laser kernel 46, ignites the air/fuel mixture 38 without actually creating a spark as does a conventional igniter. The plasma discharge happens very quickly, taking only 10 - 100 nanoseconds, in comparison to a conventional ignition which typically takes 0.8 -1.2 milliseconds.

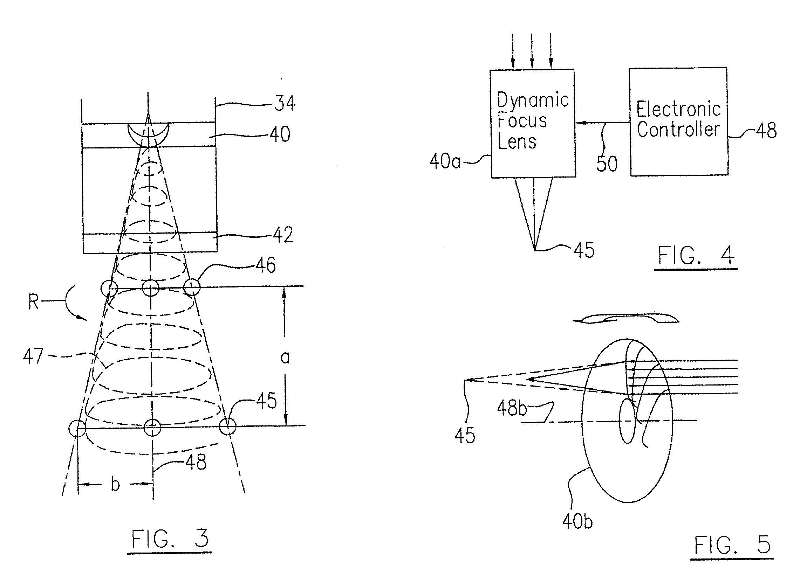

Referring to FIGS. 2 and 3, the modulating lens 40 may adjust the focal point with variable frequency in both spiral and axial capabilities in accordance with one embodiment. For example, the focal point 45 created by the modulating lens 40 may be adjusted in axial distance as indicated by letter "a" with respect to the modulating lens 40, (parallel to a central axis 48 of the modulating lens 40), or may be adjustable to move away from and towards the central axis 48 as indicated by letter "b", or may be adjustable to move about the central axis 48 as indicated by the directional arrow "R", either individually or in combination. The broken line 47 indicates one of possible routes of the moving focal point 45.

Therefore, the laser kernel 46 resulting from plasma discharging at various locations of the laser focal point 45, may continuously move within the spray of the air/fuel mixture 38 in the primary combustion zone of the combustor chamber 36, for example randomly searching for a location to meet the required conditions for ignition of the air/fuel mixture 38.

Referring to FIGS. 2, 4 and 5, the modulating lens 40 may include a dynamic focus lens 40a and an electronic controller 48 as shown in FIG. 4. The dynamic focus lens may continuously change the location of the focal point of the laser beam using an electronic signal 50 from the electronic controller 48.

Alternatively, the modulating lens 40 may include a rotating lens 40b as shown in FIG. 5 to achieve movement of the focal point of the laser beam. The rotating lens 40b may change the focal point of the laser beam (an axial distance with respect to the rotating lens 40b) as the lens 40b rotates about the central axis 48b. In addition, multiple lenses can be rotated at different speeds in unison to create a laser kernel 46 which may be axially displaced or conically rotated within the combustion chamber 36, possibly in an irregular manner. This ensures that the spray of the air/fuel mixture 38 is intersected, for example in a random manner by the moving laser kernel 46 within the primary combustion zone of the combustion chamber 36. The focused laser light energies generate small ionized particles within the combustion chamber 36 without actually creating a spark as do conventional igniters, thereby avoiding the shortcomings of those conventional igniters.

Optionally, the laser beam may be simultaneously focused into multiple varying focal points 45, each continuously moving within the air/fuel mixture 38 within the primary combustion zone of the combustion chamber 36 to randomly search for multiple locations for generating laser kernels 46 for creating multiple ignition of the air/fuel mixture 38. The multiple varying focal points 45 may be generated within the air/fuel mixture 38 sprayed from one fuel nozzle 28, or within air/fuel mixture 36 sprayed from more than one fuel nozzle 28.

The described subject matter may find the optimal path for kernel to intersect the fuel spray. That is, the focal point of delivery of maximum energy is moved at varying speeds to different points inside the combustion chamber in circles, spirals and other patterns to achieve efficient combustion.

The above description is meant to be exemplary only, and one skilled in the art will recognize that changes may be made to the embodiments described without departing from the scope of the described subject matter. For example, the dynamic laser focus apparatus may include various types of modulatable lenses other than those described in the embodiments. Still other modifications which fall within the scope of the described subject matter will be apparent to those skilled in the art, in light of a review of this disclosure, and such modifications are intended to fall within the appended claims.

## Claims

1. A laser ignition system (30) for a gas turbine engine including a combustion chamber (36), the system (30) comprising:
a laser source (32) for generating a laser beam during an ignition process of the combustion chamber (36); and
a dynamic laser focus apparatus (40) positioned outside of the combustion chamber (36) and focusing the laser beam into a continuously varying focal point (45) to generate a laser kernel (46) moving within a spray of air/fuel mixture (38) injected into the combustion chamber (36).

2. The laser ignition system (30) as defined in claim 1, wherein the dynamic laser focus apparatus (40) comprises a modulatable focusing system which creates the varying focal point (45) to generate the laser kernel (46) continuously moving in various axial distances (a) with respect to a lens (40).

3. The laser ignition system (30) as defined in claim 1 or 2, wherein the dynamic laser focus apparatus (40) comprises a modulatable focusing system to generate the laser kernel (46) continuously moving about a central axis (48) of a or the lens (40).

4. The laser ignition system (30) as defined in any of claims 1 to 3, wherein the dynamic laser focus apparatus (40) comprises a modulatable focusing system to generate the laser kernel (46) continuously moving away from and toward a central axis (48) of a or the lens (40).

5. The laser ignition system (30) as defined in any preceding claim, wherein the dynamic laser focus apparatus (40) comprises a dynamic focus lens (40a) and an electronic controller (48), the dynamic focus lens (40a) continuously changing a location of the focal point (45) as directed by an electronic signal (50) from the electronic controller (48).

6. The laser ignition system (30) as defined in any of claims 1 to 4, wherein the dynamic laser focus apparatus (40) comprises a rotating lens (40b) which changes an axial distance (a) of the focal point (45) with respect to the lens (40b) when said lens (40b) rotates about a central axis (48b) of the lens (40b).

7. The laser ignition system (30) as defined in any preceding claim, further comprising a silver-lined, helium filled fibre optic cable (44) disposed between the laser source (32) and the dynamic laser focus apparatus (40), for delivering the laser beam.

8. A method for igniting an air/fuel mixture (38) in a combustion chamber (36) of a gas turbine, comprising:
a) generating a continuous laser beam during an ignition process of the air/fuel mixture (38) in the combustion chamber (36);
b) focusing the laser beam in a continuously varying manner to generate a focal point (45) which moves continuously within the air/fuel mixture (38) searching for a location for generating a laser kernel (46) resulting from plasma discharge within the air/fuel mixture (38) in order to ignite the air/fuel mixture (38) without creating a spark.

9. The method as defined in claim 8, wherein step (b) is conducted by continuously changing an axial distance (a) of the focal point (45) of the laser beam with respect to a dynamic laser focus apparatus (40) which focuses the laser beam.

10. The method as defined in claim 8 or 9, wherein step (b) is conducted by continuously moving the focal point (45) of the laser beam about a central axis (48) of a dynamic laser focus apparatus (40) which focuses the laser beam.

11. The method as defined in any of claims 8 to 10, wherein step (b) is conducted by continuously moving the focal point (45) of the laser beam away from and toward a central axis (48) of a dynamic laser focus apparatus (40) which focuses the laser beam.

12. The method as defined in any of claims 8 to 11, wherein step (b) is conducted by continuously moving the focal point (45) in an irregular manner within the air/fuel mixture (38).

13. The method as defined in any of claims 8 to 12, wherein step (a) is conducted to generate said laser beam with a varying density.

14. The method as defined in any of claims 8 to 13, wherein step (b) is conducted using:
a dynamic focus lens (40a) to continuously change a location of the focal point (45) of the laser beam within the air/fuel mixture (38), the dynamic focus lens (40a) being controlled by an electronic signal (50); or
a rotating lens (40b) to continuously change a location of the focal point (45) of the laser beam within the air/fuel mixture (38).

15. The method as defined in any of claims 8 to 15, wherein step (b) is conducted to simultaneously generate multiple focal points (45) continuously moving within the air/fuel mixture (38) searching for multiple locations for generating laser kernels (46) for creating multiple ignitions of the air/fuel mixture (38).
